# FASCICULE DE BREVET EUROPEEN

(11) **EP 3 104 199 B1**
(45) Date de publication et mention de la délivrance du brevet: **04.08.2021**
(21) Numéro de dépôt: 16305627.8
(22) Date de dépôt: 31.05.2016
(51) Int. Cl.: G01V 99/00

(54) **PROCÉDÉ D'EXPLOITATION DES HYDROCARBURES D'UN BASSIN SÉDIMENTAIRE COMPORTANT DES ROCHES CARBONATEES, AU MOYEN D'UNE SIMULATION STRATIGRAPHIQUE**
VERFAHREN ZUR KOHLENWASSERSTOFFGEWINNUNG IN EINEM SEDIMENTBECKEN, DAS KARBONATGESTEIN UMFASST, MITHILFE EINER STRATIGRAFISCHEN SIMULATION
METHOD FOR EXTRACTING HYDROCARBONS FROM A SEDIMENTARY BASIN OF CARBONATED ROCKS, USING A STRATIGRAPHIC SIMULATION

(30) Priorité: 12.06.2015 FR 1555389
(43) Date de publication de la demande: 14.12.2016
(73) Titulaire: IFP Energies nouvelles, 92500 Rueil-Malmaison (FR)
(72) Inventeur: ADELINET, Mathilde, 75011 Paris (FR)
(74) Mandataire: IFP Energies nouvelles

(56) Documents cités:
- EP-A1- 2 816 377
- DE-A1- 19 912 250
- Flavio Stefano Anselmetti: "PHYSICAL PROPERTIES AND SEISMIC RESPONSE OF CARBONATE SEDIMENTS AND ROCKS ABHANDLUNG", , 1 janvier 1994 (1994-01-01), XP055263787, Extrait de l'Internet: URL:http://e-collection.library.ethz.ch/es erv/eth:22388/eth-22388-02.pdf#search= [extrait le 2016-04-08]
- SHIYU XU ET AL: "Modeling elastic properties in carbonate rocks", THE LEADING EDGE, SOCIETY OF EXPLORATION GEOPHYSICISTS, US, vol. 28, no. 1, 1 janvier 2009 (2009-01-01), pages 66-68,70, XP001518497, ISSN: 1070-485X, DOI: 10.1190/1.3064148
- ANSELMETTI F S ET AL: "SONIC VELOCITY IN CARBONATES-A COMBINED PRODUCT OF DEPOSITIONAL LITHOLOGY AND DIAGENETIC ALTERATIONS", SUBSURFACE GEOLOGY OF A PROGRADING CARBONATE PLATFORM MARGIN,GREAT BAHAMA BANK: RESULTS OF THE BAHAMAS DRILLING PROJECT, XX, XX, no. 70, 1 janvier 2001 (2001-01-01), pages 193-216, XP009031502,
- ANDERS DRÄGE ET AL: "A strategy for modelling the diagenetic evolution of seismic properties in sandstones", PETROLEUM GEOSCIENCE, EAPG / GEOLOGICAL SOCIETY, LONDON, GB, vol. 12, no. 4, 1 novembre 2006 (2006-11-01), pages 309-323, XP008161028, ISSN: 1354-0793, DOI: 10.1144/1354-079305-691

## Description

La présente invention concerne le domaine de l'exploration et de l'exploitation des gisements pétroliers ou de sites de stockage géologique de gaz.

L'exploration pétrolière consiste à rechercher des gisements d'hydrocarbures au sein d'un bassin sédimentaire. La compréhension des principes de la genèse des hydrocarbures et leurs liens avec l'histoire géologique du sous-sol, a permis la mise au point de méthodes d'évaluation du potentiel pétrolier d'un bassin sédimentaire. La démarche générale de l'évaluation du potentiel pétrolier d'un bassin sédimentaire comporte des allers-retours entre une prédiction du potentiel pétrolier du bassin sédimentaire, réalisée à partir d'informations disponibles concernant le bassin étudié (affleurements, campagnes sismiques, forages par exemple), et des forages d'exploration dans les différentes zones présentant le meilleur potentiel, afin de confirmer ou infirmer le potentiel prédit préalablement, et d'acquérir de nouvelles données pour alimenter de nouvelles études plus précises.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation optimaux pour ces zones (par exemple à l'aide d'une simulation de réservoir, afin de définir les nombre et positions des puits d'exploitation permettant une récupération d'hydrocarbures optimale), à forer des puits d'exploitation et, de façon générale, à mettre en place les infrastructures de production nécessaires au développement du gisement.

Dans certains bassins sédimentaires, ayant subi une histoire géologique complexe, faisant interagir de nombreux processus physiques, ou lorsque le volume de données est très important, l'évaluation du potentiel pétrolier d'un bassin sédimentaire requiert, généralement, de disposer d'outils informatiques (logiciels exécutés sur ordinateur) permettant la synthèse des données disponibles, et d'outils informatiques permettant la simulation de l'histoire géologique et des multiples processus physiques qui la contrôlent. Il s'agit d'une démarche dite de "modélisation de bassin". La famille des logiciels dits de modélisation de bassin permettent de simuler en une, deux ou trois dimensions, les processus sédimentaires, tectoniques, thermiques, hydrodynamiques et de chimie organique et inorganique qui interviennent lors de la formation d'un bassin pétrolier.

Concernant plus particulièrement les processus sédimentaires, les spécialistes utilisent des outils mettant en oeuvre un ensemble d'équations simulant l'évolution sédimentaire d'un bassin au cours des temps géologiques, c'est-à-dire depuis le dépôt des sédiments jusqu'à un temps actuel. La simulation de l'histoire sédimentaire d'un bassin requiert la prise en compte de différents paramètres : (1) l'évaluation de l'espace disponible pour la sédimentation, lié à des mouvements tectoniques et/ou eustatiques, (2) l'apport en sédiments dans le bassin, soit par les frontières, soit par l'intermédiaire d'une production ou d'une précipitation in situ, (3) le transport de ces sédiments dans l'espace disponible créé, (4) l'évolution de ces sédiments au cours de l'enfouissement, ce qu'on appelle la diagenèse. Ce type de simulation, dite simulation stratigraphique, permet notamment au spécialiste de tester différentes hypothèses sur les processus sédimentaires ayant affecté un bassin, et de mettre à jour ces hypothèses par comparaison du résultat obtenu par simulation avec l'état actuel observé des dépôts sédimentaires d'un bassin. Le logiciel DionisosFlow® (IFP Energies nouvelles, France) est un exemple d'un logiciel, dit simulateur stratigraphique, mettant en oeuvre une simulation stratigraphique.

La diagénèse figure donc parmi les processus sédimentaires majeurs de l'histoire d'un bassin sédimentaire. La diagenèse consiste en la transformation chimique, biochimique et physique des sédiments s'étant déposés dans un bassin en roches sédimentaires compactes. En effet, les sédiments qui se déposent dans un bassin sédimentaire sont meubles et riches en eau. Ces sédiments vont être soumis, lors de leur enfouissement progressif dans le bassin, à des conditions de pression et de température qui vont les transformer. Cette transformation survient généralement à faible profondeur et se déroule selon différentes étapes qui varient selon la nature des sédiments et des conditions d'enfouissement.

En comparaison des roches sédimentaires clastiques de type grès ou argiles, la diagénèse des roches carbonatées est généralement complexe, et peut notamment consister en de nombreux processus chimiques et/ou biologiques qui s'enchainent les uns après les autres. La diagenèse augmentant avec le temps et la profondeur, elle est marquée par (1) la compaction des sédiments avec perte d'eau (tassement mécanique lié au poids des terrains déposés par-dessus le sédiment ; ce processus tend à réduire la porosité dans la roche et à augmenter les points de contact entre les grains), (2) une augmentation de la température par enfouissement, ce qui favorise les réactions chimiques et (3) une multiplication de réactions variées et complexes telles que : la transformation (ou épigénisation) de certains minéraux en d'autres minéraux (par exemple dolomitisation), la dissolution des grains à leurs points de contact, et la précipitation (cimentation) dans les espaces inter-granulaires. Par ailleurs, chaque roche carbonatée de chaque bassin subit des étapes diagénétiques propres, l'intensité de chaque étape pouvant même varier d'un point à un autre du bassin considéré. On parle alors de chemin diagénétique, qui peut être plus ou moins complexe.

### État de la technique

Les documents suivants seront cités au cours de la description :
Adelinet, M., Fortin, J., & Guéguen, Y., 2011a. Dispersion of elastic moduli in a porous-cracked rock: Theoretical predictions for squirt-flow. Tectonophysics, 503(1), 173-181.
Adelinet, M., Dorbath, C., Le Ravalec, M., Fortin, J., & Guéguen, Y., 2011b. Deriving microstructure and fluid state within the Icelandic crust from the inversion of tomography data. Geophysical Research Letters, 38(3).
Granjeon, D. & Joseph, P., 1999. Concepts and applications of a 3-D multiple lithology, diffusive model in stratigraphic modeling. Numerical Experiments in Stratigraphy Recent Advances in Stratigraphie and Sedimentologic Computer Simulations SEPM Special Publications No 62*.*
Xu, S., & Payne, M. A. (2009). Modeling elastic properties in carbonate rocks. The Leading Edge, 28(1), 66-74.

Les processus intervenant au cours de la diagénèse d'une roche carbonatée ont pour effet de modifier les paramètres microstructuraux d'une roche (nature et géométrie des grains formant la matrice de la roche ; nature et géométrie des pores de la roche). De fait, les propriétés mécaniques de la roche carbonatée se trouvent affectées par les processus chimiques et/ou biologiques intervenant au cours de la diagénèse. Ainsi, les transformations diagénétiques subies par une roche au cours du temps ont pour conséquence la variation au cours des temps géologiques des propriétés mécaniques des roches (modules élastiques), et a fortiori de leurs propriétés pétrophysiques (porosité, perméabilité par exemple).

La prise en compte de la diagénèse dans les outils informatiques de simulation stratigraphique est à ce jour restreinte, puisque seul l'impact de la compaction sédimentaire sur les paramètres mécaniques est simulé numériquement. Ainsi, dans le document (Granjeon & Joseph, 1999), on décrit des lois de compaction classique qui relient la porosité du sédiment à l'enfouissement, permettant ainsi de quantifier le volume des couches sédimentaires. Si une telle restriction peut être satisfaisante (c'est-à-dire produisant un résultat de simulation suffisamment proche de la réalité) pour des roches sédimentaires de type clastique, elle ne peut conduire à une simulation satisfaisante de la diagénèse des roches carbonatées.

Or les roches carbonatées représentent plus de 50 % des roches réservoirs actuellement exploitées dans le monde. Il apparaît donc important de pouvoir prendre correctement en compte le phénomène de diagénèse, dans sa complexité, dans le cas de bassins sédimentaires comportant des roches carbonatées. Notamment, il apparaît important de prendre en compte, dans une simulation stratigraphique, l'aspect évolutif dans le temps, induit par la diagénèse, des paramètres mécaniques d'une roche carbonatée.

On connaît le document (Xu and Paine, 2009) qui présente un procédé pour déterminer des propriétés mécaniques d'une roche carbonatée à partir de mesures expérimentales. Plus précisément, les propriétés mécaniques sont déterminées à partir d'un modèle de microstructure, en testant différentes valeurs des paramètres de celui-ci (aplatissement et augmentation de la porosité). Ces tests ne considèrent toutefois pas une évolution dans le temps des paramètres du modèle microstructural, et donc des paramètres mécaniques des roches carbonatées.

On connaît également le document (Adelinet et al, 2011a) qui concerne un procédé pour déterminer des propriétés structurales d'une roche basaltique à partir de mesures réalisées sur le terrain et d'une représentation par milieu effectif. La modélisation en milieu effectif permet, à partir d'une description fine de la microstructure d'une roche à l'échelle d'un Volume Elémentaire Représentatif (VER), de calculer des propriétés mécaniques homogénéisées à l'échelle de ce volume. Dans ce document, des données de tomographie sismique sont utilisées pour inverser deux paramètres microstructuraux du modèle effectif : la densité de fissure et le module d'incompressibilité du fluide remplissant les inclusions de porosité. Ce document ne considère pas une évolution dans le temps des paramètres d'un modèle microstructural, et donc des paramètres mécaniques de la roche considérée.

On connaît également la demande EP 2816377 A1, qui concerne un procédé pour prédire la quantité et la composition des fluides (tels que H₂O, CO₂, N₂) produits par des réactions minérales opérant dans un bassin sédimentaire.

La présente invention a pour objet un procédé permettant de déterminer une évolution des paramètres mécaniques d'une roche carbonatée au cours des différentes étapes de la diagénèse subies par cette roche au sein d'un bassin sédimentaire. Ces paramètres sont ensuite pris en compte dans une simulation stratigraphique, afin de contribuer à une meilleure appréhension d'un bassin sédimentaire comportant des roches carbonatées, et ainsi à une évaluation pétrolière plus fiable de ce type de bassin.

### Le procédé selon l'invention

Ainsi, la présente invention concerne un procédé d'exploitation pétrolière d'un bassin sédimentaire, ledit bassin comportant au moins une couche de sédiments carbonatés. Au moyen d'un simulateur stratigraphique permettant de reconstituer l'histoire sédimentaire dudit bassin depuis un temps géologique t jusqu'à un temps actuel, au moyen d'au moins un échantillon de roche de ladite couche et d'une échelle d'un Volume Elémentaire Représentatif, ladite échelle étant déterminée en fonction dudit échantillon, le procédé comporte les étapes suivantes pour ladite couche :
A. à partir de mesures réalisées sur ledit échantillon, on détermine des paramètres d'un modèle microstructural représentatif de l'état diagénétique de ladite couche audit temps actuel, lesdits paramètres dudit modèle microstructural étant définis à ladite échelle ;
B. à partir de mesures réalisées sur ledit échantillon, on identifie au moins une étape diagénétique subie par lesdits sédiments de ladite couche depuis ledit temps géologique t jusqu'audit temps actuel, et on détermine des variations minimales et maximales desdits paramètres dudit modèle microstructural pour chacune desdites étapes diagénétiques ;
C. on détermine au moins un paramètre mécanique desdits sédiments de ladite couche pour chacune desdites étapes diagénétiques, au moyen d'une modélisation en milieu effectif et desdites variations desdits paramètres dudit modèle microstructural déterminées pour chacune desdites étapes diagénétiques ;
ainsi que les étapes suivantes :
D. on évalue le potentiel pétrolier dudit bassin au moins au moyen dudit simulateur et desdits paramètres mécaniques déterminés pour chacune desdites étapes diagénétiques, et on sélectionne au moins une zone dudit bassin présentant ledit potentiel pétrolier le plus élevé ;
E. on exploite ledit bassin en fonction de ladite zone sélectionnée.

Préférentiellement, lesdites mesures peuvent consister en des mesures de caractérisation de ladite roche réalisées au microscope, par diffractométrie de Rayons X, ou par porosimétrie.

Selon un mode de réalisation de l'invention, lesdits paramètres microstructuraux peuvent comprendre la souplesse des interfaces entre grains de ladite roche.

Selon un mode de réalisation de l'invention, ladite souplesse peut être supposée invariante au cours desdites étapes diagénétiques.

Selon un mode de réalisation de l'invention, on peut déterminer au moins un desdits paramètres dudit modèle microstructural par modélisation inverse.

Préférentiellement, lesdites variations minimales et maximales peuvent être déterminées à partir de mesures réalisées sur un nombre d'échantillons de ladite roche au moins égal au nombre desdites étapes diagénétiques.

Avantageusement, on peut déterminer lesdites variations minimales et maximales de la micro-porosité, de la macro-porosité, et de la composition minéralogique.

Selon un mode de réalisation de l'invention, à partir des paramètres mécaniques déterminés pour chacune desdites étapes diagénétiques, on peut déterminer la perméabilité de ladite couche pour chacune desdites étapes diagénétiques.

Selon un mode de réalisation de l'invention, à partir des paramètres mécaniques déterminés pour chacune desdites étapes diagénétiques, on peut déterminer un cube de données sismiques synthétiques pour chacune desdites étapes diagénétiques.

Préférentiellement, à l'étape D, on peut simuler en outre au moins un processus choisi parmi les processus tectoniques, thermiques, hydrodynamiques, et de chimie organique et inorganique ayant affecté ledit bassin.

Avantageusement, à l'étape E, on peut réaliser au moins un forage d'exploitation et/ou d'exploration dans lesdites zones sélectionnées pour la récupération des hydrocarbures présents au sein dudit bassin.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon la description ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

### Présentation succincte des figures

- La Figure 1 présente un exemple illustratif d'un chemin diagénétique constitué de quatre étapes diagénétiques différentes.
- les Figures 2A, 2B, et 2C présentent l'évolution au cours de la diagénèse des paramètres microstructuraux associés à l'exemple présenté en Figure 1.
- les Figure 3A et 3B présentent respectivement l'évolution des modules élastiques et des vitesses élastiques en fonction des étapes diagénétiques déterminées pour l'exemple présenté en Figure 1.
- La Figure 4 présente l'évolution de la perméabilité au cours des étapes diagénétiques déterminées pour l'exemple présenté en Figure 1.

### Description détaillée du procédé

Les définitions suivantes sont utilisées au cours de la description de l'invention :
- Modélisation en milieu effectif : il s'agit d'une modélisation physique permettant d'estimer les propriétés effectives d'un milieu à partir des propriétés locales de ses constituants.
- Volume Elémentaire Représentatif d'un milieu: il s'agit d'un volume de taille suffisamment grande pour pouvoir définir des propriétés homogènes et représentatives du milieu étudié.
- Inclusions carbonatées : il s'agit d'éléments solides composants une roche carbonatée. Il peut s'agit de bioclastes (éléments fossiles d'origine animale ou végétale, le plus souvent en fragments) ou d'oolithes (sphères formées d'un nucleus et de différentes enveloppes).
- Etude de lames minces : à partir d'un échantillon de roche amincie jusqu'à le rendre transparent, on observe la microstructure de la roche en lumière transmise au microscope optique.
- Modèle microstructural : il s'agit de la simplification de la microstructure, vue en microscopie par exemple, afin de la traduire en modèle de milieu effectif. La description d'un modèle microstructural comprend au moins la caractérisation de la matrice minérale (nature et géométrie des grains formant la matrice) et la caractérisation des inclusions de porosité (nature et géométrie des pores). Par nature de la matrice minérale, on entend la nature lithologique des grains (par exemple quartz, argiles, calcaire). Par géométrie des grains formant la matrice, on entend la forme des grains de la matrice (ellipsoïdes plus ou moins aplaties). Par nature des pores, on entend distinguer la porosité de fissure, la porosité issue d'une dissolution, etc. Et par géométrie des pores, on entend la forme des pores (pièce de monnaie pour les fissures par exemple, ou ellipsoïdes pour les pores équants).
- Paramètres ou propriétés mécaniques : il s'agit des modules élastiques définis en mécanique des milieux continus. Le comportement élastique d'un matériau homogène isotrope et linéaire est caractérisé par deux modules élastiques indépendants (modules d'incompressibilité et de cisaillement) qui sont des constantes intrinsèques du matériau.

L'invention concerne un procédé d'exploitation pétrolière d'un bassin sédimentaire comportant au moins une couche de sédiments carbonatés. En particulier, l'invention concerne la modélisation, au sein d'une simulation stratigraphique, du phénomène de diagénèse subi par des sédiments carbonatés. Une étape importante du procédé selon l'invention est la caractérisation mécanique du phénomène de diagénèse subi par les sédiments carbonatés du bassin étudié. Par procédé d'exploitation pétrolière d'un bassin sédimentaire, on entend un procédé permettant l'exploitation des hydrocarbures présents au sein dudit bassin sédimentaire.

La présente invention requiert :
- de disposer d'un simulateur stratigraphique selon l'art antérieur : un simulateur stratigraphique est un logiciel visant à reconstituer les processus sédimentaires ayant affecté le bassin depuis un temps géologique t jusqu'au temps actuel. La simulation de l'histoire sédimentaire d'un bassin requiert l'élaboration de systèmes d'équations permettant d'estimer : (1) l'évaluation de l'espace disponible pour la sédimentation, lié à des mouvements tectoniques et/ou eustatiques, (2) l'apport en sédiments dans le bassin, soit par les frontières, soit par l'intermédiaire d'une production ou d'une précipitation in situ, (3) le transport de ces sédiments dans l'espace disponible créé, (4) l'évolution de ces sédiments au cours de l'enfouissement, c'est-à-dire la diagenèse. Par simulateur stratigraphique selon l'art antérieur, on entend un simulateur stratigraphique modélisant la diagénèse par le seul phénomène de compaction des sédiments ;
- de disposer d'au moins un échantillon de roche de chacune des couches de sédiments carbonatés du bassin sédimentaire étudié : cet échantillon peut avoir été prélevé in situ, par carottage par exemple ;
- de définir une échelle d'un Volume Elémentaire Représentatif (VER) : l'échelle d'un VER est fonction de la taille des échantillons de roche mis à disposition. Il s'agit de s'affranchir de tout élément microstructural perturbant la représentativité du volume (grande fissure parcourant tout l'échantillon, trous non associés à une porosité dans tout l'échantillon, etc...).

La présente invention comporte au moins les étapes suivantes :
1. Caractérisation mécanique de la diagénèse
   1.1. Détermination des paramètres d'un modèle microstructural de l'état diagénétique actuel
   1.2. Identification des différentes étapes diagénétiques
   1.3. Détermination des variations minimales et maximales des paramètres du modèle microstructural pour chacune des étapes diagénétiques
   1.4. Détermination des paramètres mécaniques par modélisation en milieu effectif pour chacune des étapes diagénétiques
2. Evaluation du potentiel pétrolier
3. Exploitation du bassin sédimentaire

Les principales étapes de la présente invention sont détaillées ci-après. Elles sont illustrées sur un exemple (non limitatif) de chemin diagénétique subi par une couche composée de sédiments carbonatée donnée.

### 1. Caractérisation mécanique de la diagénèse

L'objet de cette première étape consiste en la caractérisation mécanique de la diagenèse ayant affecté les couches de sédiments carbonatés du bassin sédimentaire étudié. Cette étape peut être découpée, non limitativement, en quatre sous-étapes, applicables parallèlement ou séquentiellement à chacune des couches de sédiments carbonatés du bassin étudié. Les quatre sous-étapes en question sont détaillées pour une couche de sédiments carbonatés donnée.

### 1.1. Détermination des paramètres d'un modèle microstructural de l'état diagénétique actuel

Au cours de cette sous-étape, il s'agit de déterminer les paramètres d'un modèle microstructural représentatif de l'état diagénétique actuel de la couche de sédiments carbonatés considérée, à partir de mesures expérimentales réalisées sur au moins un échantillon de roche de la couche considérée. Selon l'invention, les paramètres du modèle microstructural sont définis à l'échelle d'un Volume Elémentaire Représentatif (VER), de sorte à pouvoir exploiter ces paramètres par une approche en milieux effectifs dans la sous-étape 1.4 décrite ultérieurement.

Un échantillon de roche, prélevé par exemple par un carottage, permet d'accéder aux paramètres du modèle microstructural de l'état diagénétique final de la roche étudiée. En effet, certaines étapes du processus de formation de la roche prélevée au temps actuel ne sont plus visibles que sous la forme de traces ou d'éléments géométriques (phase minéralogique incluse ou entourant une autre par exemple).

Ainsi, au cours de cette étape, on réalise des mesures sur un échantillon prélevé au temps actuel afin de déterminer les paramètres microstructuraux représentatifs de la matrice minérale (nature et géométrie des grains formant la matrice) et les paramètres microstructuraux représentatifs des inclusions de porosité (nature et géométrie des pores).

Selon l'invention, on a recours à des mesures directes sur échantillon par au moins une des techniques suivantes :
- une étude microscopique, réalisée par exemple à l'aide d'un microscope optique ou électronique à balayage : une étude microscopique permet de caractériser la matrice de la roche étudiée ainsi que sa porosité. Ainsi, par une étude microscopique, on peut accéder à la géométrie et la disposition des phases solides (la matrice), et la géométrie et la disposition de la porosité de la roche. On peut alors renseigner la matrice, les inclusions cristallines et les supports de porosité (pores sphériques ou fissures par exemple) à l'échelle d'un Volume Elémentaire Représentatif (VER) ;
- une diffractométrie des Rayons X (DRX), réalisée à l'aide d'un diffractomètre : une diffractométrie des Rayons X permet de quantifier les différentes phases minéralogiques d'un échantillon donné, ce qui permet de renseigner une fraction volumique des inclusions solides à l'échelle d'un Volume Elémentaire Représentatif (VER) ;
- une porosimétrie, réalisée à l'aide d'un spectromètre à résonance magnétique nucléaire (RMN), d'un porosimétre au Mercure ou d'un porosimétre à l'Hélium : ce type de mesures permet de quantifier le ratio entre la micro-porosité et la macro-porosité à l'échelle d'un Volume Elémentaire Représentatif (VER).

Selon un mode de mise en œuvre de l'invention, afin de compléter le modèle microstructural, on peut avoir recours à une modélisation inverse réalisée à partir de mesures sur au moins un échantillon de la roche carbonatée étudiée.

En effet, les roches carbonatées sont bien souvent caractérisées par un agencement minéralogique hétérogène, ce qui entraîne une complexification dans la réponse mécanique de ces roches. Certains paramètres du modèle microstructural, notamment la souplesse existante entre les différentes inclusions carbonatées (bioclastes, oolithes par exemple), ne peuvent alors être directement approchés par des mesures. Afin de quantifier ces paramètres, on peut alors avoir recours à une modélisation inverse.

On appelle modélisation inverse une technique d'inversion itérative. Plus précisément, on construit une fonction objectif mesurant l'écart entre des données expérimentales et des données théoriques, calculées à partir de valeurs initiales pour les paramètres à déterminer, puis on modifie les valeurs de ces paramètres, itération après itération, jusqu'à trouver un minimum de la fonction objectif. De nombreux algorithmes de minimisation de fonction objectif sont connus du spécialiste, tels que la méthode de Gauss-Newton, la méthode de Newton-Raphson ou encore le gradient conjugué. Selon un mode de réalisation préféré de la présente invention, on utilise la méthode de Gauss-Newton.

Selon un mode de mise en œuvre de la présente invention, les données expérimentales de la fonction objectif sont des mesures ultrasoniques des vitesses des ondes sismiques de compression (ondes P) et des ondes sismiques de cisaillement (ondes S). Ces mesures peuvent avoir été obtenues en laboratoire, ou bien avoir été obtenues par une campagne d'acquisition sismique suivie d'un traitement sismique, et d'une mise à l'échelle comme présentée dans la demande FR 2951555 (US 12/908130).

Selon un mode de mise en œuvre de la présente invention, le calcul des vitesses théoriques, à partir de valeurs des paramètres microstructuraux à l'itération courante, peut être obtenu par une modélisation en milieu effectif telle que décrite dans (Adelinet et al, 2011b).

Les données théoriques sont alors comparées aux données expérimentales, et la modélisation inverse permet de minimiser l'écart entre ces deux jeux de données, en ajustant les valeurs des paramètres microstructuraux recherchés.

Ainsi, à l'issue de cette première sous-étape, on obtient un modèle microstructural, renseigné à l'échelle d'un Volume Elémentaire Représentatif (VER), représentatif de l'état diagénétique au temps actuel de la couche de sédiments carbonatés considérée.

### 1.2. Identification des différentes étapes diagénétiques

Au cours de cette sous-étape, il s'agit d'identifier les différents stades diagénétiques par lesquels est passé la roche carbonatée du bassin sédimentaire étudié, à partir de mesures réalisées sur au moins un échantillon de la roche carbonatée étudiée. Selon l'invention, on identifie au moins une étape diagénétique. Préférentiellement, on identifie plusieurs étapes diagénétiques.

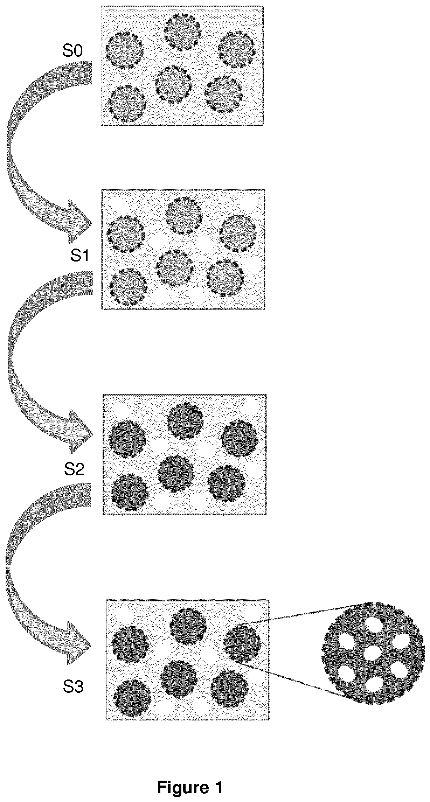

Si les échantillons de roche prélevés au temps actuel renseignent sur un état diagénétique final d'un point de vue des propriétés mécaniques, une étude fine de la microstructure via des lames minces renseigne sur l'histoire diagénétique subie par la roche. En effet, certaines étapes précoces ont été seulement partiellement effacées par les étapes tardives et peuvent donc être encore identifiées. A partir de différentes lames minces, le géologue carbonatiste est capable d'identifier et d'ordonner les différents processus subis par la roche carbonatée au cours de la diagenèse, telles que la cimentation, la dolomitisation, l'aragonitisation ou encore la dissolution. La Figure 1 présente un schéma à but illustratif du chemin diagénétique suivi par une roche carbonatée donnée. Ainsi, cette Figure présente une succession d'images, chaque image simulant une visualisation au microscope d'un échantillon de la roche considérée pour une étape diagénétique donnée. Le chemin diagénétique de la roche considérée est constitué de quatre étapes diagénétiques : une étape de cimentation S0 (les grains étant représentés en gris moyen), une étape de dissolution S1 (entrainant la formation de macro-porosité, représentée par des ellipses blanches), une étape de dolomitisation S2 (entrainant le remplacement des minéraux de calcite par de la dolomite), et une étape de dissolution S3 (entrainant la formation de micro-porosité, représentée par des ellipses blanches intra-grains).

### 1.3. Détermination des variations minimales et maximales des paramètres du modèle microstructural pour chacune des étapes diagénétiques

Au cours de cette sous-étape, il s'agit de déterminer les bornes de variation des paramètres du modèle microstructural déterminés à l'étape 1.1, et ce, pour chacune des étapes diagénétiques identifiées à l'étape 1.2.

Pour cette étape, on part du principe qu'un échantillon de la couche carbonatée considérée, voire une partie d'un échantillon, n'a pas subi le même état d'avancement diagénétique que respectivement un autre échantillon de cette couche, ou qu'une autre partie d'un même échantillon. Ainsi, les mesures de paramètres microstructuraux peuvent être différentes d'un échantillon à l'autre, voire d'une partie d'un échantillon à l'autre. Selon l'invention, les valeurs minimales et maximales des paramètres du modèle microstructural sont déterminées à partir de mesures réalisées sur au moins un échantillon de roche de la couche carbonatée. Préférentiellement, on évalue les valeurs minimales et maximales des paramètres du modèle microstructural sur plusieurs échantillons, afin de bénéficier de la dispersion des mesures. Préférentiellement, les valeurs minimales et maximales des paramètres du modèle microstructural sont déterminées à partir d'un nombre d'échantillons de roche au moins égal au nombre d'étapes diagénétiques identifiées à l'étape 1.2.

Selon l'invention, les mesures utilisées pour la détermination des valeurs minimales et maximales des paramètres mécaniques sont réalisées par au moins une des techniques décrites dans l'étape 1.1 (c'est-à-dire une étude microscopique, une diffractométrie, une porosimétrie). En particulier, l'étude de lames minces permet une quantification des paramètres microstructuraux tels que le remplacement de cristaux de calcite par des cristaux de dolomite, le remplissage incomplet d'une porosité par une phase minérale.

Selon un mode de mise en œuvre de l'invention, le spécialiste fixe au moins une borne de variations d'au moins un paramètre mécanique à une valeur prédéfinie. Par exemple, si un échantillon ou le nombre d'échantillons disponibles ne permettent pas d'accéder à une borne de variations d'un des paramètres mécaniques, le spécialiste peut fixer cette borne à partir de base de données existantes dans le domaine, de ces connaissances générales, etc.

Selon un mode préféré de mise en œuvre de l'invention, on identifie au moins les valeurs minimales et maximales de la micro-porosité, de la macro-porosité et de la composition minéralogique.

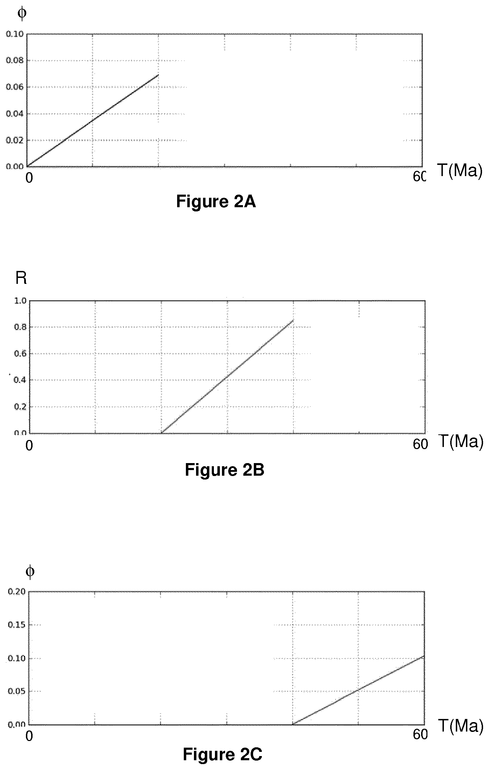

En faisant varier les paramètres du modèle microstructural entre ces valeurs minimales et maximales au cours du temps (la durée de chaque étape diagénétique pouvant être choisie arbitrairement), on dispose alors de l'évolution des paramètres du modèle microstructural au cours des différentes étapes diagénétiques du chemin diagénétique établi à l'étape 1.2 précédente. Ainsi, les Figures 2A, 2B, et 2C montrent l'évolution, au cours de la diagénèse, des paramètres microstructuraux associés à l'exemple présenté en Figure 1. Plus précisément, la Figure 2A présente l'évolution de la (macro-)porosité φ (grandeur sans unité comprise entre 0 et 1) au cours de l'étape diagénétique S1, la Figure 2B présente l'évolution du ratio R (grandeur sans unité comprise entre 0 et 1) de remplacement de la calcite par la dolomite au cours de l'étape diagénétique S2, et la Figure 2C présente l'évolution de la (micro-)porosité φ au cours de l'étape diagénétique S3.

Selon un mode de réalisation dans lequel le modèle microstructural comprend la souplesse des interfaces entre grains (voir l'étape 1.1), on suppose que cette souplesse est invariante au cours des étapes diagénétiques.

### 1.1. Détermination des paramètres mécaniques par modélisation en milieu effectif pour chacune des étapes diagénétiques

Au cours de cette étape, à partir des paramètres microstructuraux définis à l'étape 1.1 et de l'évolution de ces paramètres au cours des différentes étapes diagénétiques déterminée à l'étape 1.3, on détermine au moins un paramètre mécanique de la roche carbonatée étudiée par modélisation en milieu effectif, et ce pour chacune des étapes diagénétiques identifiées à l'étape 1.2. Préférentiellement, et dans le cas d'une roche isotrope, on détermine deux paramètres mécaniques : le module d'incompressibilité et le module de cisaillement.

La modélisation en milieu effectif permet, à partir d'une description fine de la microstructure d'une roche à l'échelle d'un Volume Elémentaire Représentatif (VER), de calculer les propriétés mécaniques homogénéisées. L'évolution des paramètres microstructuraux ayant été déterminée au cours des différentes étapes diagénétiques identifiées, les propriétés mécaniques sont calculées directement par homogénéisation pour chacune des étapes du chemin diagénétique. Ce calcul repose sur la résolution du problème d'Eshelby, c'est-à-dire sur la résolution de la perturbation induite au premier ordre par la présence d'une inclusion ellipsoïdale dans une matrice.

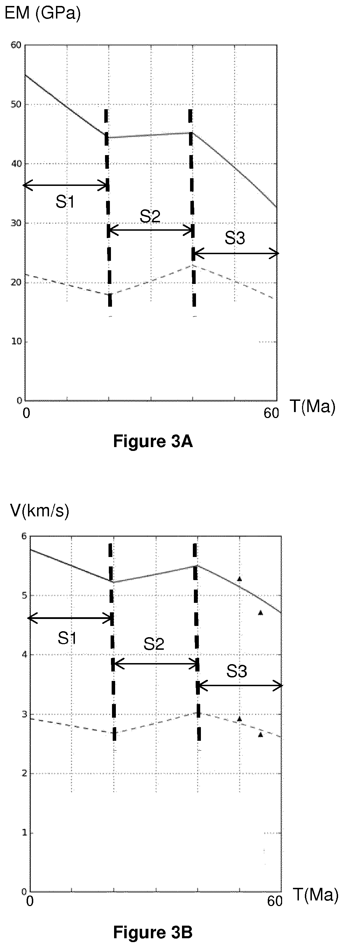

Dans l'exemple présenté en Figure 1, plusieurs inclusions étant présentes dans la matrice, on parle alors de problème auxiliaire d'Eshelby. Dans ce cas, des méthodes de calcul des moyennes sont utilisées pour calculer les paramètres mécaniques du milieu. Ces calculs se font dans un cas isotrope et deux modules élastiques EM indépendants sont calculés au cours du chemin diagénétique. Ainsi, la Figure 3A présente en trait plein l'évolution au cours de la diagénèse du module d'incompressibilité (« bulk modulus » en anglais), qui est une constante propre au matériau étudié, reliant la contrainte au taux de déformation d'un matériau isotrope soumis à une compression isostatique. La Figure 3A présente également en trait pointillé l'évolution au cours de la diagénèse du module de cisaillement (« shear modulus » en anglais), qui est une constante intrinsèque au matériau étudié, qui intervient dans la caractérisation des déformations causées par des efforts de cisaillement reliant la contrainte au taux de déformation d'un matériau isotrope soumis à une compression isostatique. Par ailleurs, à partir de l'évolution des modules élastiques au cours de la diagenèse et en résolvant l'équation de Christoffel, on peut en déduire l'évolution des vitesses V des ondes sismiques P (courbe en trait plein en Figure 3B) et S (courbe en trait pointillé en Figure 3B) au cours de la diagenèse. Selon un mode de mise en œuvre de la présente invention, on vérifie au cours de cette étape la cohérence entre le résultat de la modélisation obtenue par la présente invention et les mesures expérimentales représentatives de l'étape diagénétique terminale. Ainsi, la Figure 3B représente par des triangles les mesures des vitesses des ondes sismiques P et S réalisées en laboratoire (mesures ultrasoniques par exemple) sur des échantillons de roche.

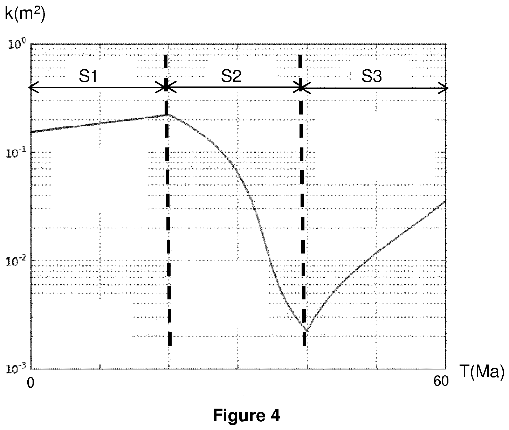

Selon un autre mode de mise en œuvre de la présente invention, à partir des propriétés mécaniques évaluées pour chaque étape du chemin diagénétique, on détermine la perméabilité de la roche carbonatée pour chaque étape du chemin diagénétique. Pour ce faire, les modèles de milieu effectif, initialement renseignés en propriétés mécaniques, sont convertis en perméabilité. On a ainsi accès à l'évolution de la perméabilité k au cours des différentes étapes de la diagenèse, telle que présentée en Figure 4. Le spécialiste a parfaite connaissance de méthodes pour transformer des paramètres mécaniques en perméabilité.

Selon un autre mode de mise en œuvre de la présente invention, à partir des propriétés mécaniques déterminées pour chaque étape du chemin diagénétique, on construit des cubes de données sismiques, dits synthétiques, pour chacune des étapes diagénétiques identifiées. Pour ce faire, on construit un cube d'impédance sismique pour chaque étape diagénétique, à partir des propriétés mécaniques déterminées pour l'étape considérée. Puis on utilise une technique de simulation de données sismiques qui permet, à partir d'une ondelette sismique, de transformer ces cubes d'impédances en données sismiques synthétiques. Le spécialiste a parfaite connaissance de méthodes pour transformer des propriétés mécaniques en impédances sismiques, et transformer des impédances sismiques en données sismiques synthétiques. On peut alors comparer le cube de données sismiques synthétiques obtenu par la présente invention pour l'étape diagénétique finale avec un cube de données sismiques réelles. En fonction des conclusions de cette comparaison, le spécialiste peut déduire si certaines hypothèses faites sur les paramètres de la simulation stratigraphique sont pertinentes ou non, et, en conséquence, modifier ou non les paramètres en question.

Ainsi la présente invention permet de faire le lien entre la description géologique et sédimentologique des différentes étapes de diagenèse subies par une roche carbonatée et les propriétés mécaniques, et éventuellement pétrophysiques et/ou sismique, de la roche au cours de ces différentes étapes diagénétiques.

### 2. Evaluation du potentiel pétrolier

A l'issue de l'étape précédente, on obtient une modélisation de l'évolution des paramètres mécaniques d'une roche carbonatée au cours du temps. Selon l'invention, cette modélisation est prise en compte dans une simulation stratigraphique, permettant ainsi de contribuer à une meilleure compréhension de l'histoire sédimentaire du bassin étudié.

On peut en outre avoir recours à d'autres outils de la famille de la modélisation de bassin afin de simuler les processus tectoniques, thermiques, hydrodynamiques et de chimie organique et inorganique ayant affecté le bassin étudié. Un exemple d'un tel outil de modélisation de bassin est le logiciel TEMISFLOW (IFP Energies nouvelles, France).

Ainsi, à l'issue de cette étape, le spécialiste peut disposer d'informations sur :
i. la mise en place des couches sédimentaires,
ii. les effets de la diagénèse sur les sédiments ainsi déposés,
iii. leur réchauffement au cours de leur enfouissement,
iv. les modifications de pressions de fluides résultant de cet enfouissement,
v. la formation des hydrocarbures formés par thermogénèse,
vi. le déplacement de ces hydrocarbures dans le bassin sous l'effet de la flottabilité, de la capillarité, des différences de gradients de pression,
vii. la quantité d'hydrocarbures issus de la thermogénèse.

A partir de telles informations, le spécialiste a alors connaissance des zones dudit bassin comportant des hydrocarbures, ainsi que la teneur, la nature et la pression des hydrocarbures qui y sont piégés. Le spécialiste est alors en mesure de sélectionner la ou les zones du bassin étudié présentant le meilleur potentiel pétrolier.

### 3. Exploitation du bassin sédimentaire

L'exploitation pétrolière du bassin peut alors prendre plusieurs formes, notamment :
- la réalisation de forages d'exploration dans les différentes zones sélectionnées comme présentant le meilleur potentiel, afin de confirmer ou infirmer le potentiel estimé préalablement, et d'acquérir de nouvelles données pour alimenter de nouvelles études plus précises,
- la définition de schémas d'exploitation optimaux pour les zones sélectionnées, par exemple à l'aide d'une simulation de réservoir, afin de définir les nombre et positions des puits d'exploitation permettant une récupération d'hydrocarbures optimale,
- la réalisation de forages d'exploitation (puits producteurs ou injecteurs) pour la récupération des hydrocarbures présents au sein du bassin sédimentaire dans les zones sélectionnées comme présentant le meilleur potentiel,
- la mise en place des infrastructures de production nécessaires au développement du gisement.

### Produit programme d'ordinateur

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit précédemment, lorsque ledit programme est exécuté sur un ordinateur.

## Revendications

1. Procédé d'exploitation pétrolière d'un bassin sédimentaire, ledit bassin comportant au moins une couche de sédiments carbonatés, au moyen d'un simulateur stratigraphique permettant de reconstituer l'histoire sédimentaire dudit bassin depuis un temps géologique t jusqu'à un temps actuel, au moyen d'au moins un échantillon de roche de ladite couche et d'une échelle d'un Volume Elémentaire Représentatif, ladite échelle étant déterminée en fonction dudit échantillon, **caractérisé en ce qu'**on réalise les étapes suivantes pour ladite couche :
A. à partir de mesures réalisées sur ledit échantillon, on détermine des paramètres d'un modèle microstructural représentatif de l'état diagénétique de ladite couche audit temps actuel, lesdits paramètres dudit modèle microstructural étant définis à ladite échelle ;
B. à partir de mesures réalisées sur ledit échantillon, on identifie au moins une étape diagénétique subie par lesdits sédiments de ladite couche depuis ledit temps géologique t jusqu'audit temps actuel, et on détermine des variations minimales et maximales desdits paramètres dudit modèle microstructural pour chacune desdites étapes diagénétiques ;
C. on détermine au moins un paramètre mécanique desdits sédiments de ladite couche pour chacune desdites étapes diagénétiques, au moyen d'une modélisation en milieu effectif et desdites variations desdits paramètres dudit modèle microstructural déterminées pour chacune desdites étapes diagénétiques ;
et **en ce qu'**on réalise les étapes suivantes :
D. on évalue le potentiel pétrolier dudit bassin au moins au moyen dudit simulateur et desdits paramètres mécaniques déterminés pour chacune desdites étapes diagénétiques, et on sélectionne au moins une zone dudit bassin présentant ledit potentiel pétrolier le plus élevé ;
E. on exploite ledit bassin en fonction de ladite zone sélectionnée.

2. Procédé selon la revendication précédente, dans lequel lesdites mesures consistent en des mesures de caractérisation de ladite roche réalisées au microscope, par diffractométrie de Rayons X, ou par porosimétrie.

3. Procédé selon l'une des revendications précédentes, dans lequel lesdits paramètres microstructuraux comprennent la souplesse des interfaces entre grains de ladite roche.

4. Procédé selon la revendication 3, dans lequel ladite souplesse est supposée invariante au cours desdites étapes diagénétiques.

5. Procédé selon l'une des revendications précédentes, dans lequel on détermine au moins un desdits paramètres dudit modèle microstructural par modélisation inverse.

6. Procédé selon l'une des revendications précédentes, dans lequel lesdites variations minimales et maximales sont déterminées à partir de mesures réalisées sur un nombre d'échantillons de ladite roche au moins égal au nombre desdites étapes diagénétiques.

7. Procédé selon l'une des revendications précédentes, dans lequel on détermine lesdites variations minimales et maximales de la micro-porosité, de la macro-porosité, et de la composition minéralogique.

8. Procédé selon l'une des revendications précédentes, dans lequel à partir des paramètres mécaniques déterminés pour chacune desdites étapes diagénétiques, on détermine la perméabilité de ladite couche pour chacune desdites étapes diagénétiques.

9. Procédé selon l'une des revendications précédentes, dans lequel à partir des paramètres mécaniques déterminés pour chacune desdites étapes diagénétiques, on détermine un cube de données sismiques synthétiques pour chacune desdites étapes diagénétiques.

10. Procédé selon l'une des revendications précédentes, dans lequel, à l'étape D, on simule en outre au moins un processus choisi parmi les processus tectoniques, thermiques, hydrodynamiques, et de chimie organique et inorganique ayant affecté ledit bassin.

11. Procédé selon l'une des revendications précédentes, dans lequel, à l'étape E, on réalise au moins un forage d'exploitation et/ou d'exploration dans lesdites zones sélectionnées pour la récupération des hydrocarbures présents au sein dudit bassin.

12. Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

## Patentansprüche

1. Verfahren zur Ölgewinnung in einem Sedimentbecken, wobei das Becken mindestens eine Schicht Karbonatsedimente aufweist, mittels eines stratigrafischen Simulators, der es gestattet, mittels mindestens einer Gesteinsprobe der Schicht und eines Maßstabs eines repräsentativen Elementarvolumens die Sedimenthistorie des Beckens von einer geologischen Zeit t bis zu einer aktuellen Zeit nachzubilden, wobei der Maßstab in Abhängigkeit von der Probe bestimmt ist, **dadurch gekennzeichnet, dass** für die Schicht die folgenden Schritte durchgeführt werden:
A. anhand von Messungen, die an der Probe vorgenommen werden, werden Parameter eines mikrostrukturalen Modells bestimmt, das für den diagenetischen Zustand der Schicht zur aktuellen Zeit repräsentativ ist, wobei die Parameter des mikrostrukturalen Modells in dem Maßstab definiert sind;
B. anhand von Messungen, die an der Probe vorgenommen werden, wird mindestens ein diagenetischer Schritt identifiziert, der von den Sedimenten der Schicht von der geologischen Zeit t bis zur aktuellen Zeit durchlaufen wird, und es werden minimale und maximale Abweichungen der Parameter des mikrostrukturalen Modells für jeden der diagenetischen Schritte bestimmt;
C. es wird mindestens ein mechanischer Parameter der Sedimente der Schicht für jeden der diagenetischen Schritte mittels einer Modellierung im effektiven Medium und der Abweichungen der Parameter des mikrostrukturalen Modells, die für jeden der diagenetischen Schritte bestimmt werden, bestimmt;
und dadurch, dass die folgenden Schritte durchgeführt werden:
D. es wird das Ölpotential des Beckens mittels des Simulators und der mechanischen Parameter, die für jeden der diagenetischen Schritte bestimmt werden, bewertet, und es wird mindestens ein Bereich des Beckens ausgewählt, der das höchste Ölpotential aufweist;
E. das Becken wird in Abhängigkeit vom ausgewählten Bereich erschlossen.

2. Verfahren nach dem vorhergehenden Anspruch, wobei die Messungen aus Messungen zur Charakterisierung des Gesteins bestehen, die per Mikroskop durch Röntgenstrahlen-Diffraktometrie oder durch Porosimetrie vorgenommen werden.

3. Verfahren nach einem der vorhergehenden Ansprüche, wobei die mikrostrukturalen Parameter die Weichheit der Grenzflächen zwischen Körnern des Gesteins umfassen.

4. Verfahren nach Anspruch 3, wobei die Weichheit im Verlauf der diagenetischen Schritte als invariant angenommen wird.

5. Verfahren nach einem der vorhergehenden Ansprüche, wobei mindestens einer der Parameter des mikrostrukturalen Modells durch inverse Modellierung bestimmt wird.

6. Verfahren nach einem der vorhergehenden Ansprüche, wobei die minimalen und maximalen Abweichungen ausgehend von Messungen bestimmt werden, die an einer Anzahl von Proben des Gesteins vorgenommen werden, die mindestens gleich der Anzahl der diagenetischen Schritte ist.

7. Verfahren nach einem der vorhergehenden Ansprüche, wobei die minimalen und maximalen Abweichungen der Mikroporosität, der Makroporosität und der mineralogischen Zusammensetzung bestimmt werden.

8. Verfahren nach einem der vorhergehenden Ansprüche, wobei ausgehend von den mechanischen Parametern, die für jeden der diagenetischen Schritte bestimmt werden, die Durchlässigkeit der Schicht für jeden der diagenetischen Schritte bestimmt wird.

9. Verfahren nach einem der vorhergehenden Ansprüche, wobei ausgehend von den mechanischen Parametern, die für jeden der diagenetischen Schritte bestimmt werden, ein Kubus von synthetischen seismischen Daten für jeden der diagenetischen Schritte bestimmt wird.

10. Verfahren nach einem der vorhergehenden Ansprüche, wobei bei Schritt D ferner mindestens ein Prozess simuliert wird, der aus den tektonischen, thermischen, hydrodynamischen Prozessen und jenen der organischen und anorganischen Chemie, die sich auf das Becken ausgewirkt haben, gewählt ist.

11. Verfahren nach einem der vorhergehenden Ansprüche, wobei bei Schritt E mindestens eine Explorations- oder Exploitationsbohrung in den Bereichen vorgenommen wird, die für die Gewinnung der Kohlenwasserstoffe ausgewählt sind, die innerhalb des Beckens vorhanden sind.

12. Computerprogrammprodukt, das aus einem Kommunikationsnetz heruntergeladen werden kann und/oder auf einem computerlesbaren Datenträger gespeichert ist und/oder von einem Prozessor ausgeführt werden kann, umfassend Programmcode-Anweisungen für die Umsetzung des Verfahrens nach einem der vorhergehenden Ansprüche, wenn das Programm auf einem Computer ausgeführt wird.

## Claims

1. Method for exploiting for petroleum in a sedimentary basin, said basin comprising at least one layer of carbonate sediments, by means of a stratigraphic simulator that makes it possible to reconstruct the sedimentary history of said basin from a geological time t up to a current time, by means of at least one sample of rock from said layer and a Representative Elementary Volume scale, said scale being determined according to said sample, **characterized in that** the following steps are carried out for said layer:
A. on the basis of measurements performed on said sample, parameters of a microstructural model representative of the diagenetic state of said layer at said current time are determined, said parameters of said microstructural model being defined at said scale;
B. on the basis of measurements performed on said sample, at least one diagenetic step undergone by said sediments of said layer from said geological time t up to said current time is identified, and minimum and maximum variations in said parameters of said microstructural model are determined for each of said diagenetic steps;
C. at least one mechanical parameter of said sediments of said layer is determined for each of said diagenetic steps, by means of effective medium modelling and of said variations in said parameters of said microstructural model which are determined for each of said diagenetic steps;
and **in that** the following steps are carried out:
D. the petroleum potential of said basin is evaluated at least by means of said simulator and of said mechanical parameters determined for each of said diagenetic steps, and at least one zone of said basin exhibiting said highest petroleum potential is selected;
E. said basin is exploited according to said selected zone.

2. Method according to the preceding claim, wherein said measurements consist in measurements for characterizing said rock performed under microscope, by means of X-ray diffractometry, or by means of porosimetry.

3. Method according to either of the preceding claims, wherein said microstructural parameters comprise the flexibility of the interfaces between grains in said rock.

4. Method according to Claim 3, wherein said flexibility is assumed to be invariant over the course of said diagenetic steps.

5. Method according to one of the preceding claims, wherein at least one of said parameters of said microstructural model is determined by inverse modelling.

6. Method according to one of the preceding claims, wherein said minimum and maximum variations are determined on the basis of measurements performed on a number of samples of said rock at least equal to the number of said diagenetic steps.

7. Method according to one of the preceding claims, wherein said minimum and maximum variations are determined in the microporosity, in the macroporosity and in the mineralogical composition.

8. Method according to one of the preceding claims, wherein, on the basis of the mechanical parameters determined for each of said diagenetic steps, the permeability of said layer is determined for each of said diagenetic steps.

9. Method according to one of the preceding claims, wherein, on the basis of the mechanical parameters determined for each of said diagenetic steps, a synthetic seismic data cube is determined for each of said diagenetic steps.

10. Method according to one of the preceding claims, wherein, in step D, at least one process chosen from among tectonic, thermal, hydrodynamic, and organic and inorganic chemistry processes which have affected said basin is also simulated.

11. Method according to one of the preceding claims, wherein, in step E, at least one exploratory and/or extraction drilling is performed in said selected zones in order to recover the hydrocarbons present within said basin.

12. Computer program product that is downloadable from a communication network and/or stored on a computer-readable medium and/or executable by a processor, comprising program code instructions for implementing the method according to one of the preceding claims, when said program is executed on a computer.
